# EUROPEAN PATENT SPECIFICATION

(11) **EP 3 933 015 B1**
(45) Date of publication and mention of the grant of the patent: **20.12.2023**
(21) Application number: 20762678.9
(22) Date of filing: 31.01.2020
(51) Int. Cl.: C10N 20/00, C10N 30/10, C10N 40/30, C10M 105/38, C10M 107/24, C10M 107/34, C09K 5/04, C10M 171/00, C10N 20/02, C10N 20/04

(54) **REFRIGERATOR COMPOSITION**
KÜHLMITTELZUSAMMENSETZUNG
COMPOSITION POUR RÉFRIGÉRATEUR

(30) Priority: 28.02.2019 JP 2019035998
(43) Date of publication of application: 05.01.2022
(73) Proprietor: Idemitsu Kosan Co.,Ltd., Chiyoda-ku Tokyo 100-8321 (JP)
(72) Inventor: MATSUMOTO, Tomoya, Ichihara-shi, Chiba 299-0107 (JP)
(74) Representative: Hoffmann Eitle
(86) International application number: PCT/JP2020/003609
(87) International publication number: WO 2020/175005

(56) References cited:
- JP-A- 2012 072 273
- JP-A- 2013 014 672
- JP-A- 2016 503 450
- JP-A- 2018 177 953
- JP-A- 2018 501 334

## Description

### Technical Field

The present invention relates to a composition for refrigerator containing a mixed refrigerant and a refrigerator oil.

### Background Art

In general, a refrigerator, such as a compression-type refrigerator, has a structure including at least a compressor, a condenser, an expansion mechanism (such as an expansion valve), an evaporator, and the like, in which a mixture of a refrigerant and a refrigerator oil (which may be hereinafter referred to as a " composition for refrigerator") is circulated within a closed system.

As the refrigerant which is used for compression-type refrigerators, a fluorinated hydrocarbon compound with a low environmental load has been used in place of a hydrochlorofluorocarbon (HCFC) having been ordinarily used frequently. Examples of the fluorinated hydrocarbon compound frequently used include a saturated fluorinated hydrocarbon compound (hydrofluorocarbon, which may be hereinafter referred to as "HFC"), such as 1,1,1,2-tetrafluoroethane (R134a), difluoromethane (R32), and a mixture of difluoromethane and pentafluoroethane (R410A).

The use of an unsaturated fluorinated hydrocarbon compound (hydrofluoroolefin, which may be hereinafter referred to as "HFO") having a low global warming potential, such as 1,3,3,3-tetrafluoropropene (R1234ze) and 2,3,3,3-tetrafluoropropene (R1234yf), is also investigated.

In view of the demand of a refrigerant having a lower global warming potential as described above, the practical use of refrigerants containing the HFO has been investigated in recent years.

For example, PTL 1 describes a working fluid composition for a refrigerator containing a refrigerant containing difluoromethane and an unsaturated fluorinated hydrocarbon compound at a particular mass ratio, and at least one kind of a base oil selected from a polyol ester and a polyvinyl ether each having a particular structure.

PTL2 discloses compositions, methods, and systems having utility in refrigeration applications, and in certain forms, systems for heating and/or refrigeration applications, typically using refrigerant R-410A.

PTL 3 discloses compositions and methods for reducing flammability, such as in heating, ventilation and air conditioning (HVAC) systems, having the R32 refrigerant included in the refrigerant composition. Refrigerant compositions and methods of use are described that can be used to retrofit, repair, control flammability, improve performance, improve lubricant solubility and miscibility, and improve safety in HVAC systems.

PTL 4 discloses a lubricant composition for a compression type refrigerator using a refrigerant containing a 1-3C saturated fluorinated hydrocarbon refrigerant, a base oil, at least one oxygen-containing organic compound selected from polyoxyalkylene glycols, polyvinyl ethers, copolymers of poly(oxy)alkylene glycol or its mono ether and a polyvinyl ether, and polyol esters, which all have a hydroxyl value of ≤15 mgKOH/g.

### Citation List

### Patent Literature

PTL 1: WO 2013/062058
PTL2: JP 2016 503450A
PTL3: JP 2018 501334A
PTL4: JP 2013 014672A

### Summary of Invention

### Technical Problem

As described above, the practical use of refrigerants containing HFO has been investigated in recent years, in particular the practical use of a mixed refrigerant containing HFO and HFC (which may be hereinafter referred simply to as a "mixed refrigerant") has been investigated, and some mixed refrigerant are being used practically.

For example, in the case where a composition for refrigerator is used in the aforementioned compression-type refrigerator, the discharge temperature of the compressor may vary depending on the kind of the refrigerant contained in the composition for refrigerator, and therefore in the use of a new refrigerant, particularly a new mixed refrigerant, there may be a case where the refrigerant is exposed to a higher temperature environment than the originally used refrigerant. Furthermore, the composition for refrigerator that has been once charged in the equipment is used for a long period of time under circulation in the equipment. Accordingly, the composition for refrigerator containing the mixed refrigerant is demanded to have good thermal stability and oxidation stability.

The composition for refrigerator is used, for example, in a compression-type refrigerator having the aforementioned structure, and since the characteristics of the composition for refrigerator influence the lifetime and the refrigeration efficiency of the compression-type refrigerator, the composition for refrigerator is demanded to have good thermal stability and oxidation stability from this standpoint.

The present invention has been made in view of these issues, and an object thereof is to provide a composition for refrigerator that contains a mixed refrigerant and has good thermal stability and oxidation stability.

### Solution to Problem

As a result of the earnest investigations by the present inventors, it has bee found that the issues can be solved by a composition for refrigerator containing a mixed refrigerant satisfying a particular composition, and a refrigerator oil containing a base oil (P) containing a particular synthetic oil and having a particular hydroxy number. The present invention has been completed based on the knowledge. The present invention is defined by the claims. The following embodiments are useful to understanding the present invention.

In one embodiment, the present disclosure relates to a composition for refrigerator containing a mixed refrigerant, and a refrigerator oil containing a base oil (P),
the mixed refrigerant containing a saturated fluorinated hydrocarbon compound (HFC) and an unsaturated fluorinated hydrocarbon compound (HFO),
the saturated fluorinated hydrocarbon compound (HFC) containing at least difluoromethane (R32) and 1,1,1,2,2-pentafluoroethane (R125),
the mixed refrigerant having a content of any one of difluoromethane (R32) and 1,1,1,2,2-pentafluoroethane (R125) of more than 0% by mass and 20% by mass or less based on the total amount of the mixed refrigerant, and a content of the other thereof of 50% by mass or more based on the total amount of the mixed refrigerant, and
the base oil (P) containing one or more kind selected from the group consisting of a polyvinyl ether (PVE), a polyalkylene glycol (PAG), and a polyol ester (POE), and the base oil (P) having a hydroxy number of 15 mgKOH/g or less.

The present disclosure relates to a composition for refrigerator according to claim 1, wherein the mixed refrigerant has a content of 1,1,1,2-tetrafluoroethane (R134a) of 0% by mass based on the total amount of the mixed refrigerant.

In a further embodiment, the present disclosure relates to a composition for refrigerator according to claim 1, wherein the mixed refrigerant has a content of the unsaturated fluorinated hydrocarbon compound (HFO) of 40% by mass or less based on the total amount of the mixed refrigerant.

In a further embodiment, the present disclosure relates to a composition for refrigerator according to claim 1, wherein the mixed refrigerant has an absolute value of a difference between a content of difluoromethane (R32) and a content of 1,1,1,2,2-pentafluoroethane (R125) of 40% by mass or more and 70% by mass or less.

In a further embodiment, the present disclosure relates to a composition for refrigerator according to claim 1, wherein the mixed refrigerant does not contain 1,1,1,2-tetrafluoroethane (R134a).

In a further embodiment, the present disclosure relates to a composition for refrigerator according to claim 1, wherein the unsaturated fluorinated hydrocarbon compound (HFO) contains 2,3,3,3-tetrafluoropropene (R1234yf).

In a further embodiment, the present disclosure relates to a composition for refrigerator according to claim 1, wherein the base oil (P) has a content of the one or more kind selected from the group consisting of a polyvinyl ether (PVE), a polyalkylene glycol (PAG), and a polyol ester (POE) of 90% by mass or more and 100% by mass or less based on the total amount of the base oil (P).

The present disclosure relates to a composition for refrigerator according to claim 1, wherein the mixed refrigerant has a total content of the mixed refrigerant and refrigerator oil of 100% based on the total amount of the composition for refrigerator.

In one embodiment, the present disclosure relates to a method for producing the composition for refrigerator according to claim 1, the method including mixing a mixed refrigerant, and a refrigerator oil containing a base oil (P),
the mixed refrigerant containing a saturated fluorinated hydrocarbon compound (HFC) and an unsaturated fluorinated hydrocarbon compound (HFO),
the saturated fluorinated hydrocarbon compound (HFC) containing at least difluoromethane (R32) and 1,1,1,2,2-pentafluoroethane (R125),
the mixed refrigerant having a content of any one of difluoromethane (R32) and 1,1,1,2,2-pentafluoroethane (R125) of more than 0% by mass and 20% by mass or less based on the total amount of the mixed refrigerant, and a content of the other thereof of 50% by mass or more based on the total amount of the mixed refrigerant, and
the base oil (P) containing one or more kind selected from the group consisting of a polyvinyl ether (PVE), a polyalkylene glycol (PAG), and a polyol ester (POE), and the base oil (P) having a hydroxy number of 15 mgKOH/g or less.

In a further embodiment, the present disclosure relates to a refrigerator including the composition for refrigerator according to claim 1 charged therein.

In a further embodiment, the present disclosure relates to an air conditioner including the composition for refrigerator according to claim 1 charged therein.

In a further embodiment, the present disclosure relates to a method for using a composition for refrigerator, including charging the composition for refrigerator according to claim 1 in a refrigerator or an air conditioner. Advantageous Effects of Invention

According to the present invention, a composition for refrigerator that contains a mixed refrigerant and has good thermal stability and oxidation stability can be provided.

### Description of Embodiments

### [Composition for Refrigerator]

A composition for refrigerator according to one embodiment of the present invention contains a mixed refrigerant, and a refrigerator oil containing a base oil (P), the mixed refrigerant contains a saturated fluorinated hydrocarbon compound (HFC) and an unsaturated fluorinated hydrocarbon compound (HFO), the saturated fluorinated hydrocarbon compound (HFC) contains at least difluoromethane (R32) and 1,1,1,2,2-pentafluoroethane (R125), the mixed refrigerant has a content of any one of difluoromethane (R32) and 1,1,1,2,2-pentafluoroethane (R125) of more than 0% by mass and 20% by mass or less based on the total amount of the mixed refrigerant, and a content of the other thereof of 50% by mass or more based on the total amount of the mixed refrigerant, the base oil (P) contains one or more kind selected from the group consisting of a polyvinyl ether (PVE), a polyalkylene glycol (PAG), and a polyol ester (POE), and the base oil (P) has a hydroxy number of 15 mgKOH/g or less.

The case where the mixed refrigerant does not contain the saturated fluorinated hydrocarbon compound (HFC) satisfying the aforementioned requirement is not desirable from the standpoint of the achievement of the composition for refrigerator having better thermal stability and oxidation stability. The case where the mixed refrigerant does not contain the unsaturated fluorinated hydrocarbon compound (HFO) is not desirable from the standpoint of the demand of the refrigerant having a lower warming potential as described above.

The case where the composition for refrigerator does not contain the base oil (P) satisfying the aforementioned requirement is also not desirable from the standpoint of the achievement of the composition for refrigerator having better thermal stability and oxidation stability.

In the description herein, the term "stability" that is simply described means the thermal stability and the oxidation stability of the composition for refrigerator.

In the description herein, the term "hydrocarbon group" means a group constituted only by a carbon atom and a hydrogen atom. The "hydrocarbon group" includes an "aliphatic group" constituted by a linear chain or a branched chain, an "alicyclic group" having one or more saturated or unsaturated carbon rings with no aromaticity, and an "aromatic group" having one or more aromatic rings with aromaticity, such as a benzene ring.

In the description herein, the expression "number of ring carbon atoms" indicates the number of carbon atoms among atoms constituting the ring itself of the compound having a structure including atoms bonded in a ring form. In the case where the ring is substituted by a substituent, the number of carbon atoms contained in the substituent is not included in the number of ring carbon atoms.

The expression "number of ring atoms" indicates the number of atoms constituting the ring itself of the compound having a structure including atoms bonded in a ring form. The atom that does not constitute the ring (for example, a hydrogen atom terminating a bond of the atom constituting the ring), or the atom contained in a substituent in the case where the ring is substituted by the substituent is not included in the number of ring atoms.

Examples of the substituent in the expression "substituted or unsubstituted" include an alkyl group having 1 or more and 10 or less (preferably 1 or more and 6 or less, more preferably 1 or more and 4 or less, and still more preferably 1 or more and 3 or less) carbon atoms; a cycloalkyl group having 3 or more and 10 or less (preferably 3 or more and 8 or less, more preferably 4 or more and 6 or less, and still more preferably 5 or 6) ring carbon atoms; an aryl group having 6 or more and 18 or less (preferably 6 or more and 12 or less) ring carbon atoms; a halogen atom (such as a fluorine atom, a chlorine atom, a bromine atom, and an iodine atom); a cyano group; a nitro group; a hydroxy group; and an amino group.

These substituents each may be further substituted by the arbitrary aforementioned substituent.

A term "unsubstituted" in the expression "substituted or unsubstituted" means that the compound is not substituted by the substituent, but the hydrogen atom is bonded thereto.

In the description herein, the lower limit values and the upper limit values described in stages for the preferred numeral ranges (such as the range of the content) each may be independently combined. For example, from the expression "preferably 10 or more, more preferably 30 or more, and still more preferably 40 or more, and preferably 90 or less, more preferably 80 or less, and still more preferably 70 or less", ranges obtained by combining the lower limit values and the upper limit values independently selected therefrom, such as "10 or more and 70 or less", "30 or more and 70 or less", and "40 or more and 80 or less", may be selected. Furthermore, from the similar expression, ranges simply defined by only one of the lower limit value or the upper limit value, such as "40 or more" and "70 or less", may be selected. The similar interpretation may be applied to preferred ranges selected, for example, from the expressions "preferably 10 or more and 90 or less, more preferably 30 or more and 80 or less, and still more preferably 40 or more and 70 or less" and "preferably 10 to 90, more preferably 30 to 80, and still more preferably 40 to 70". In the description herein, for example, the expression for the numeral range "10 to 90" has the same meaning as the expression "10 or more and 90 or less".

The components contained in the composition for refrigerator will be described below.

### <Mixed Refrigerant>

The mixed refrigerant contains a saturated fluorinated hydrocarbon compound (HFC) and an unsaturated fluorinated hydrocarbon compound (HFO), the saturated fluorinated hydrocarbon compound (HFC) contains at least difluoromethane (R32) and 1,1,1,2,2-pentafluoroethane (R125), the content of any one of difluoromethane (R32) and 1,1,1,2,2-pentafluoroethane (R125) is more than 0% by mass and 20% by mass or less based on the total amount of the mixed refrigerant, and the content of the other thereof is 50% by mass or more based on the total amount of the mixed refrigerant.

The mixed refrigerant will be described below.

### (Saturated Fluorinated hydrocarbon Compound (HFC))

The saturated fluorinated hydrocarbon compound (HFC) contains at least difluoromethane (R32) and 1,1,1,2,2-pentafluoroethane (R125), the content of any one of R32 and R125 is more than 0% by mass and 20% by mass or less based on the total amount (100% by mass) of the mixed refrigerant, and the content of the other thereof is 50% by mass or more based on the total amount of the mixed refrigerant. In the case where the HFC does not satisfy the requirement, the stability is deteriorated.

Accordingly, form the standpoint of the achievement of the good stability, in the HFC, the content of the smaller one of the contents of R32 and R125 is preferably 2% by mass or more and 18% by mass or less, more preferably 4% by mass or more and 15% by mass or less, and further preferably 6% by mass or more and 12% by mass or less, based on the total amount (100% by mass) of the mixed refrigerant, and the content of the larger one thereof is preferably 52% by mass or more, more preferably 55% by mass or more, and still more preferably 58% by mass or more, based on the total amount (100% by mass) of the mixed refrigerant. The upper limit of the content of the larger one of the contents of R32 and R125 is not particularly limited, as far as the effects of the present invention are exerted, and is preferably 90% by mass, more preferably 80% by mass, and still more preferably 70% by mass, based on the total amount (100% by mass) of the mixed refrigerant.

The mechanism that the HFC satisfying the requirement achieves the excellent stability may not be clear, and it is considered that the excellent stability that has not achieved can be exerted through mutual interaction of the combination of the mixed refrigerant containing R32 and R125 mixed at the particular content ratio, and the particular refrigerator oil described later.

In the case where in the HFC, the refrigerant having a smaller content between R32 and R125 is R32, the content of R32 is preferably 2% by mass or more and 18% by mass or less, more preferably 5% by mass or more and 15% by mass or less, and still more preferably 10% by mass or more and 12% by mass or less, based on the total amount (100% by mass) of the mixed refrigerant, from the standpoint of the achievement of the good stability. In this case, the content of R125, which is the refrigerator having a larger content, is preferably 52% by mass or more and 80% by mass or less, more preferably 55% by mass or more and 70% by mass or less, and still more preferably 58% by mass or more and 60% by mass or less, based on the total amount (100% by mass) of the mixed refrigerant, from the same standpoint as above.

In the case where in the HFC, the refrigerant having a smaller content between R32 and R125 is R125, on the other hand, the content of R125 is preferably 2% by mass or more and 18% by mass or less, more preferably 4% by mass or more and 12% by mass or less, and still more preferably 6% by mass or more and 8% by mass or less, based on the total amount (100% by mass) of the mixed refrigerant, from the standpoint of the achievement of the good stability. In this case, the content of R32, which is the refrigerator having a larger content, is preferably 55% by mass or more and 90% by mass or less, more preferably 60% by mass or more and 80% by mass or less, and still more preferably 65% by mass or more and 70% by mass or less, based on the total amount (100% by mass) of the mixed refrigerant, from the same standpoint as above.

In the mixed refrigerant, the absolute value of the difference between the content of R32 (based on the total amount (100% by mass) of the mixed refrigerant) and the content of R125 (based on the total amount (100% by mass) of the mixed refrigerant) is preferably 40% by mass or more and 70% by mass or less, more preferably 43% by mass or more and 65% by mass or less, and still more preferably 47% by mass or more and 62% by mass or less, from the standpoint of the achievement of the good stability.

In the mixed refrigerant, the content of 1,1,1,2-tetrafluoroethane (R134a) is 0% by mass, based on the total amount of the mixed refrigerant, and it is still further preferred that the mixed refrigerant does not contain 1,1,1,2-tetrafluoroethane (R134a).

The HFC may further contain additional HFC, in addition to the aforementioned HFC. Examples of the additional HFC include fluorides of alkanes having 1 or more and 4 or less carbon atoms except for R32, R125, and R134a. Examples of the fluorides include trifluoromethane (R23), 1,1-difluoroethane (R152a), 1,1,1-trifluoroethane (R143a), 1,1,2-trifluoroethane (R143), and 1,1,2,2-tetrafluoroethane (R134).

These HFC may be used alone or as a combination of two or more kinds thereof.

In the HFC contained in the mixed refrigerant, the total content of R32 and R125 is preferably 85% by mass or more and 100% by mass or less, more preferably 90% by mass or more and 100% by mass or less, still more preferably 95% by mass or more and 100% by mass or less, and still further preferably 100% by mass, based on the total amount (100% by mass) of the HFC, from the standpoint of the achievement of the good stability.

In the mixed refrigerant, the content of the HFC is preferably 55% by mass or more and 85% by mass or less, more preferably 60% by mass or more and 80% by mass or less, and still more preferably 65% by mass or more and 75% by mass or less, based on the total amount (100% by mass) of the mixed refrigerant, from the standpoint of the achievement of the good stability.

### (Unsaturated Fluorinated hydrocarbon Compound (HFO))

Examples of the unsaturated fluorinated hydrocarbon compound (HFO) include compounds having a carbon-carbon double bond, such as fluorides of a linear or branched chain-like olefin having 2 or more and 6 or less carbon atoms, and a cyclic olefin having 4 or more and 6 or less carbon atoms.

More specific examples thereof include ethylene having 1 or more and 3 or less (preferably 3) fluorine atoms introduced thereto, propene having 1 or more and 5 or less fluorine atoms introduced thereto, butene having 1 or more and 7 or less fluorine atoms introduced thereto, pentene having 1 or more and 9 or less fluorine atoms introduced thereto, hexene having 1 or more and 11 or less fluorine atoms introduced thereto, cyclobutene having 1 or more and 5 or less fluorine atoms introduced thereto, cyclopentene having 1 or more and 7 or less fluorine atoms introduced thereto, and cyclohexene having 1 or more and 9 or less fluorine atoms introduced thereto.

In the HFO, a fluoride of propene is preferred, propene having 3 or more and 5 or less fluorine atoms introduced thereto is more preferred, and propene having 4 fluorine atoms introduced thereto is further preferred.

Preferred examples of the HFO include 1,2,3,3,3-petafluoropropene (R1225ye), 2,3,3,3-tetrafluoropropene (R1234yf), 1,3,3,3-tetrafluoropropene (R1234ze), 1,2,3,3-tetrafluoropropene (R1234ye), 1,1,2-trifluoroethylene (R1123), and (Z)-1,1,1,4,4,4-hexafluoro-2-butene (R1336mzz(Z)). Among these HFO, one or more kind selected from the group consisting of R1234yf, R1234ze, R1123, and R1336mzz(Z) is preferred, one or more kind selected from the group consisting of R1234yf, R1234ze, and R1336mzz(Z) is more preferred, one or more kind selected from the group consisting of R1234yf and R1234ze is further preferred, and R1234yf is still further preferred.

These HFO may be used alone or as a combination of two or more kinds thereof. Examples of the combination in the case where two or more kinds of the HFO are used in combination include a combination of R1234yf and R1234ze.

In the HFO contained in the mixed refrigerant, the content of the fluoride of propene is preferably 50% by mass or more and 100% by mass or less, more preferably 70% by mass or more and 100% by mass or less, still more preferably 90% by mass or more and 100% by mass or less, and still further preferably 100% by mass, based on the total amount (100% by mass) of the HFO.

The HFO contained in the mixed refrigerant preferably contains R1234yf. In the HFO contained in the mixed refrigerant, the content of R1234yf is preferably 50% by mass or more and 100% by mass or less, more preferably 70% by mass or more and 100% by mass or less, still more preferably 90% by mass or more and 100% by mass or less, and still more preferably 100% by mass, based on the total amount (100% by mass) of the HFO.

In the mixed refrigerant, the content of the HFO is preferably 40% by mass or less, more preferably 35% by mass or less, and still more preferably 31% by mass or less, based on the total amount (100% by mass) of the mixed refrigerant, from the standpoint of the achievement of the good stability. In the mixed refrigerant, the lower limit of the content of the HFO is more than 0% by mass with no particular limitation as far as the effects of the present invention are exerted, and is preferably 10% by mass, more preferably 20% by mass, and still more preferably 25% by mass, based on the total amount (100% by mass) of the mixed refrigerant.

In the mixed refrigerant, the total content of the HFO and the HFC is preferably 90% by mass or more and 100% by mass or less, more preferably 95% by mass or more and 100% by mass or less, still further preferably 98% by mass or more and 100% by mass or less, and still more preferably 100% by mass, based on the total amount (100% by mass) of the mixed refrigerant.

The mixed refrigerant may contain an additional refrigerant in addition to the HFO and the HFC. Preferred examples of the additional refrigerant include a natural refrigerant.

### (Natural Refrigerant)

Examples of the natural refrigerant include one or more kind selected from the group consisting of a hydrocarbon based refrigerant (HC), carbon dioxide (CO₂, carbonic acid gas), and ammonia. The natural refrigerants may be used alone or as a combination of two or more kinds thereof.

The hydrocarbon based refrigerant is preferably a hydrocarbon having 1 or more and 8 or less carbon atoms, more preferably a hydrocarbon having 1 or more and 5 or less carbon atoms, and still more preferably a hydrocarbon having 3 or more and 5 or less carbon atoms. In the case where the number of carbon atoms thereof is 8 or less, the refrigerant is preferred since the boiling point of the refrigerant does not become too high. Examples of the hydrocarbon based refrigerant include one or more kind selected from the group consisting of methane, ethane, ethylene, propane (R290), cyclopropane, propylene, n-butane, isobutane (R600a), 2-methylbutane, n-pentane, isopentane, and cyclopentaneisobutane, and these may be used alone or as a combination of two or more kinds thereof.

One embodiment of the mixed refrigerant is preferably a mixed refrigerant containing R32 and R125 as the HFC and R1234yf as the HFO, in which the content of any one of R32 and R125 is more than 0% by mass and 20% by mass or less based on the total amount of the mixed refrigerant, the content of the other thereof is 50% by mass or more based on the total amount of the mixed refrigerant, and the content of R 1234yf is more than 0% by mass and 40% by mass or less; more preferably a mixed refrigerant containing R32 and R125 as the HFC and R1234yf as the HFO, in which the content of any one of R32 and R125 is 2% by mass or more and 18% by mass or less based on the total amount of the mixed refrigerant, the content of the other thereof is 52% by mass or more and 90% by mass or less based on the total amount of the mixed refrigerant, and the content of R1234yf is 10% by mass or more and less than 40% by mass; still more preferably a mixed refrigerant containing R32 and R125 as the HFC and R1234yf as the HFO, in which the content of any one of R32 and R125 is 4% by mass or more and 15% by mass or less based on the total amount of the mixed refrigerant, the content of the other thereof is 55% by mass or more and 80% by mass or less based on the total amount of the mixed refrigerant, and the content of R1234yf is 10% by mass and or more 35% by mass or less; still more preferably a mixed refrigerant containing R32 and R125 as the HFC and R1234yf as the HFO, in which the content of any one of R32 and R125 is 6% by mass or more and 12% by mass or less based on the total amount of the mixed refrigerant, the content of the other thereof is 58% by mass or more and 70% by mass or less based on the total amount of the mixed refrigerant, and the content of R1234yf is 20% by mass or more and 35% by mass or less; and still further preferably a mixed refrigerant containing R32 and R125 as the HFC and R1234yf as the HFO, in which the content of any one of R32 and R125 is 6% by mass or more and 12% by mass or less based on the total amount of the mixed refrigerant, the content of the other thereof is 58% by mass or more and 70% by mass or less based on the total amount of the mixed refrigerant, and the content of R1234yf is 25% by mass or more and 31% by mass or less.

The preferred embodiments of the HFO and the HFC and the preferred contents thereof described as the combination of the refrigerants in the embodiments are shown as examples of preferred contents and combinations of the HFO and the HFC in the mixed refrigerant described above. Accordingly, the embodiments of the mixed refrigerant are not limited to these embodiments, and the preferred embodiments and the preferred contents of the HFO and the HFC may be any combination of the preferred embodiments and the preferred contents thereof.

### [Refrigerator Oil]

The refrigerator oil contains the base oil (P) containing one or more kind selected from the group consisting of a polyvinyl ether (which may be hereinafter referred to as "PVE"), a polyalkylene glycol (which may be hereinafter referred to as "PAG"), and a polyol ester (which may be hereinafter referred to as "POE"), and the base oil (P) has a hydroxy number of 15 mgKOH/g or less.

The content of the base oil (P) is preferably 90% by mass or more and 100% by mass or less, more preferably 95% by mass or more and 100% by mass or less, still more preferably 97% by mass or more and 100% by mass or less, and still further preferably 98% by mass or more and 100% by mass or less, based on the total amount of 100% by mass of the refrigerator oil, from the standpoint of the achievement of the better stability.

### <Base Oil (P)>

The base oil (P) contained in the refrigerator oil is a base oil containing one or more kind selected from the group consisting of PVE, PAG, and POE.

The base oil (P) preferably contains one or more kind selected from the group consisting of PVE and PAG, and more preferably contains PVE, from the standpoint of the achievement of the better stability.

The content of the one or more kind selected from the group consisting of PVE, PAG, and POE is preferably 90% by mass or more and 100% by mass or less, more preferably 95% by mass or more and 100% by mass or less, still more preferably 98% by mass or more and 100% by mass or less, and still further preferably 100% by mass, based on the total amount of 100% by mass of the base oil (P), from the standpoint of the achievement of the better refrigerant solubility.

The PVE, the PAG, and the POE contained in the base oil (P) will be described below.

### (Polyvinyl Ether (PVE))

Examples of the polyvinyl ether (PVE) include polymers having one or more kind of structural unit derived from a vinyl ether. In the case where the PVE is included in the base oil (P), the base oil (P) may contain the PVE alone or may contain a combination of two or more kinds thereof.

In the PVE, from the standpoint of the achievement of the better stability, polymers having one or more kind of structural unit derived from a vinyl ether and having an alkyl group having 1 or more and 4 or less carbon atoms in a side chain thereof are preferred.

In the PVE, a polymer (A1) having one or more kind of structural unit represented by the following general formula (A-1) is preferred.

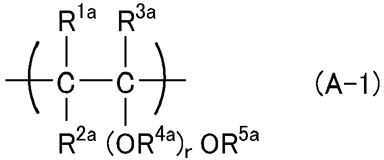

In the general formula (A-1), R^{1a}, R^{2a}, and R^{3a} each independently represent a hydrogen atom or a hydrocarbon group having 1 or more and 8 or less carbon atoms; R^{4a} represents a divalent hydrocarbon group having 2 or more and 10 or less carbon atoms; and R^{5a} represents a hydrocarbon group having 1 or more and 10 or less carbon atoms.

In the general formula (A-1), r is a mean value of the number of units represented by OR^{4a} and represents a number of 0 or more and 10 or less, and it is preferably a number of 0 or more and 5 or less, more preferably a number of 0 or more and 3 or less, and still more preferably 0.

In the general formula (A-1), in the case where plural groups represented by OR^{4a} exist (i.e., in the case where r is a number of 2 or more), the plural groups represented by OR^{4a} may be the same as or different from each other.

In the case where r is 0, the bond between the carbon atom (C) and -OR^{5a} in the general formula (A-1) is a single bond, and the carbon atom (C) bonds directly to -OR^{5a}.

Examples of the hydrocarbon group having 1 or more and 8 or less carbon atoms, which may be selected for R^{1a}, R^{2a}, and R^{3a}, include alkyl groups, such as a methyl group, an ethyl group, various propyl groups, various butyl groups, various pentyl groups, various hexyl groups, various heptyl groups, and various octyl groups; cycloalkyl groups, such as a cyclopentyl group, a cyclohexyl group, various methylcyclohexyl groups, various ethylcyclohexyl groups, and various dimethylcyclohexyl groups; aryl groups, such as a phenyl group, various methylphenyl groups, various ethylphenyl groups, and various dimethylphenyl groups; and arylalkyl groups, such as a benzyl group, various phenylethyl groups, and various methylbenzyl groups.

In the description herein, the expression "various X groups" encompasses all isomers that are considered as the X groups. For example, the term "various alkyl groups" represents "linear, branched, or cyclic hydrocarbon groups". For example, the term "various propyl groups" represents various propyl groups, such as a n-propyl group and an isopropyl group; the term "various butyl groups" represents various butyl groups, such as a n-butyl group, a sec-butyl group, an isobutyl group, a tert-butyl group, and a cyclobutyl group.

The carbon number of the hydrocarbon group which may be selected for R^{1a}, R^{2a}, and R^{3a} is preferably 1 or more and 6 or less, more preferably 1 or more and 4 or less, and still more preferably 1 or more and 3 or less.

R^{1a}, R^{2a}, and R^{3a} are each independently preferably a hydrogen atom or an alkyl group having 1 or more and 8 or less carbon atoms, more preferably a hydrogen atom or an alkyl group having 1 or more and 6 or less carbon atoms, still more preferably a hydrogen atom or an alkyl group having 1 or more and 4 or less carbon atoms, and yet still more preferably a hydrogen atom or an alkyl group having 1 or more and 3 or less carbon atoms.

R^{1a}, R^{2a}, and R^{3a} each may be the same as or different from each other.

Examples of the divalent hydrocarbon group having 2 or more and 10 or less carbon atoms, which may be selected for R^{4a}, include divalent aliphatic groups, such as an ethylene group, a 1,2-propylene group, a 1,3-propylene group, various butylene groups, various pentylene groups, various hexylene groups, various heptylene groups, various octylene groups, various nonylene groups, and various decylene groups; alicyclic groups that are a divalent residue of an alicyclic compound, such as cyclohexane, methylcyclohexane, ethylcyclohexane, dimethylcyclohexane, and propylcyclohexane; divalent aromatic groups, such as various phenylene groups, various methylphenylene groups, various ethylphenylene groups, various dimethylphenylene groups, and various naphthylene groups; divalent alkyl-aromatic groups having a monovalent bonding site in each of the alkyl group moiety and the aromatic moiety of an alkyl-aromatic hydrocarbon, such as toluene, xylene, and ethylbenzene; and divalent alkyl-aromatic groups having a bonding site in the alkyl group moiety of a polyalkyl-aromatic hydrocarbon, such as xylene and diethylbenzene.

The carbon number of the hydrocarbon group which may be selected for R^{4a} is preferably 2 or more and 8 or less, more preferably 2 or more and 6 or less, and still more preferably 2 or more and 4 or less.

R^{4a} is preferably a divalent aliphatic group having 2 or more and 10 or less carbon atoms, preferably a divalent aliphatic group having 2 or more and 6 or less carbon atoms, and still more preferably a divalent aliphatic group having 2 or more and 4 or less carbon atoms.

Examples of the hydrocarbon group having 1 or more and 10 or less carbon atoms, which may be selected for R^{5a}, include alkyl groups, such as a methyl group, an ethyl group, various propyl groups, various butyl, various pentyl groups, various hexyl groups, various heptyl groups, various octyl groups, various nonyl groups, and various decyl groups; cycloalkyl groups, such as a cyclopentyl group, a cyclohexyl group, various methylcyclohexyl groups, various ethylcyclohexyl groups, various propylcyclohexyl groups, and various dimethylcyclohexyl groups; aryl groups, such as a phenyl group, various methylphenyl groups, various ethylphenyl groups, various dimethylphenyl groups, various propylphenyl groups, various trimethylphenyl groups, various butylphenyl groups, and various naphthyl groups; and arylalkyl groups, such as a benzyl group, various phenylethyl groups, various methylbenzyl groups, various phenylpropyl groups, and various phenylbutyl groups.

The carbon number of the hydrocarbon group which may be selected for R^{5a} is preferably 1 or more and 8 or less, and more preferably 1 or more and 6 or less.

From the standpoint of the further enhancement of the stability, R^{5a} is preferably an alkyl group having 1 or more and 6 or less carbon atoms, and more preferably an alkyl group having 1 or more and 4 carbon atoms.

In one embodiment of the present invention, the polymer (A1) preferably has a structural unit (α1) wherein R^{5a} is an ethyl group.

The content of the structural unit (α1) is preferably 60% by mass or more and 100% by mass or less, more preferably 70% by mass or more and 100% by mass or less, and still more preferably 80% by mass or more and 100% by mass or less, still further preferably 85% by mass or more and 100% by mass or less, and still more further preferably 90% by mass or more and 100% by mass or less, based on the total amount (100% by mass) of the structural units of the polymer (A1) except for the units constituting the terminal part, from the standpoint of the further enhancement of the refrigerant solubility.

In the polymer (A1), the number of units of the structural unit (polymerization degree) represented by the general formula (A-1) may be suitably set to a value that provides a hydroxy number of the base oil (P) within a range of 15 mgKOH/g or less.

The polymer (A1) may be a homopolymer having only one kind of the structural unit represented by the general formula (A-1), or may be a copolymer having two or more kinds of the structural units.

The copolymerization mode of the copolymer is not particularly limited and may be a block copolymer, a random copolymer, or a graft copolymer.

Into the terminal part of the polymer (A1), a monovalent group derived from a saturated hydrocarbon, an ether, an alcohol, a ketone, an amide, and a nitrile may be introduced.

In an embodiment of the present invention, one terminal of the polymer (A1) is preferably a group represented by the following general formula (A-1-i).

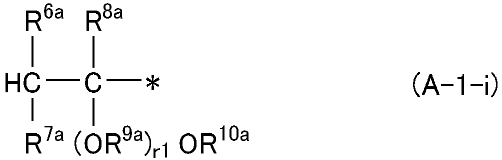

In the general formula (A-1-i), _{*} indicates the bonding position to the carbon atom in the structural unit represented by the general formula (A-1).

In the general formula (A-1-i), R^{6a}, R^{7a}, and R^{8a} each independently represent a hydrogen atom or a hydrocarbon group having 1 or more and 8 or less carbon atoms, preferably a hydrogen atom or a hydrocarbon group having 1 or more and 6 or less carbon atoms, more preferably a hydrogen atom or an alkyl group having 1 or more and 6 or less carbon atoms, and still more preferably a hydrogen atom or an alkyl group having 1 or more and 4 or less carbon atoms.

R^{6a}, R^{7a}, and R^{8a} each may be the same as or different from each other.

Examples of the hydrocarbon group having 1 to 8 carbon atoms, which may be selected for R^{6a}, R^{7a}, and R^{8a}, include the same ones as those enumerated as the hydrocarbon group having 1 or more and 8 or less carbon atoms, which may be selected for R^{1a}, R^{2a}, and R^{3a} in the general formula (A-1).

In the general formula (A-1-i), R^{9a} represents a divalent hydrocarbon group having 2 or more and 10 or less carbon atoms, preferably a divalent hydrocarbon group having 2 or more and 8 or less carbon atoms, more preferably a divalent hydrocarbon group having 2 or more and 6 or less carbon atoms, and still more preferably a divalent aliphatic group having 2 or more and 4 or less carbon atoms.

In the general formula (A-1-i), r1 is a mean value of the number of units represented by OR^{9a} and represents a number of 0 or more and 10 or less, preferably a number of 0 or more and 5 or less, more preferably a number of 0 or more and 3 or less, and still more preferably 0.

In the general formula (A-1-i), in the case where plural groups represented by OR^{9a} exist (i.e., in the case where r1 is a number of 2 or more), the plural groups represented by OR^{9a} may be the same as or different from each other.

In the case where r1 is 0, the bond between the carbon atom (C) and -OR^{10a} in the general formula (A-1-i) is a single bond, and the carbon atom (C) bonds directly to -OR^{10a}.

Examples of the divalent hydrocarbon group having 2 or more and 10 or less carbon atoms, which may be selected for R^{9a}, include the same ones as those enumerated as the divalent hydrocarbon group having 2 or more and 10 or less carbon atoms, which may be selected for R^{4a} in the general formula (A-1).

In the general formula (A-1-i), R^{10a} represents a hydrocarbon group having 1 or more and 10 or less carbon atoms, preferably a hydrocarbon group having 1 or more and 8 or less carbon atoms, and more preferably an alkyl group having 1 or more and 8 or less carbon atoms.

In the case where r1 in the general formula (A-1-i) is 0, R^{10a} is more preferably an alkyl group having 1 or more and 6 or less carbon atoms, and in the case where r1 is 1 or more, R^{10a} is more preferably an alkyl group having 1 or more and 4 or less carbon atoms.

Examples of the hydrocarbon group having 1 or more and 10 or less carbon atoms, which may be selected for R^{10a}, include the same ones as those enumerated as the hydrocarbon group having 1 or more and 10 or less carbon atoms, which may be selected for R^{5a} in the general formula (A-1).

It is preferred in the polymer (A1) that one terminal is the group represented by the general formula (A-1-i), and the other terminal is one kind selected from the group consisting of the group represented by the general formula (A-1-i), a group represented by the following general formula (A-1-ii), a group represented by the following general formula (A-1-iii), and a group having an olefinic unsaturated bond.

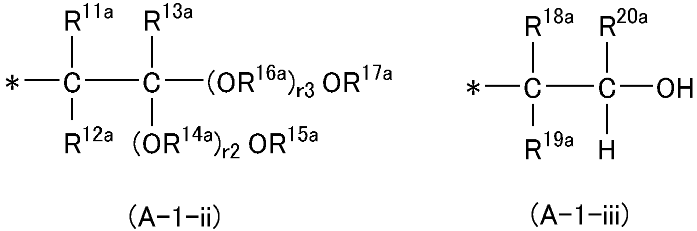

In the general formulae (A-1-ii) and (A-1-iii), R^{11a}, R^{12a}, R^{13a}, R^{18a}, R^{19a}, and R^{20a} each independently represent a hydrogen atom or a hydrocarbon group having 1 or more and 8 or less carbon atoms, preferably a hydrogen atom or a hydrocarbon group having 1 or more and 6 or less carbon atoms, more preferably a hydrogen atom or an alkyl group having 1 or more and 6 or less carbon atoms, and still more preferably a hydrogen atom or an alkyl group having 1 or more and 3 or less carbon atoms. R^{11a}, R^{12a}, R^{13a}, R^{18a}, R^{19a}, and R^{20a} each may be the same as or different from each other.

Examples of the hydrocarbon group which may be selected for R^{11a}, R^{12a}, R^{13a}, R^{18a}, R^{19a}, and R^{20a} include the same ones as those enumerated as the hydrocarbon group having 1 or more and 8 or less carbon atoms, which may be selected for R^{1a}, R^{2a}, and R^{3a} in the general formula (A-1).

In the general formula (A-1-ii), R^{14a} and R^{16a} each independently represent a divalent hydrocarbon group having 2 or more and 10 or less carbon atoms, preferably a divalent hydrocarbon group having 2 or more and 6 or less carbon atoms, and more preferably a divalent aliphatic group having 2 or more and 4 or less carbon atoms. Examples of the divalent hydrocarbon group which may be selected for R^{14a} and R^{16a} include the same ones as those enumerated as the divalent hydrocarbon group, which may be selected for R^{4a} in the general formula (A-1).

In the general formula (A-1-ii), r2 and r3 are each a mean value of the number of units represented by OR^{14a} and OR^{16a} and each independently represent a number of 0 or more and 10 or less, and they are each preferably a number of 0 or more and 5 or less, more preferably a number of 0 or more and 3 or less, and still more preferably 0.

In the general formula (A-1-ii), in the case where plural groups represented by each of OR^{14a} and OR^{16a} exist, the plural groups represented by each of OR^{14a} and OR^{16a} may be the same as or different from each other.

In the case where r2 is 0, the bond between the carbon atom (C) and -OR^{15a} in the general formula (A-1-ii) is a single bond, and the carbon atom (C) bonds directly to -OR^{15a}. Similarly, in the case where r3 is 0, the bond between the carbon atom (C) and -OR^{17a} in the general formula (A-1-ii) is a single bond, and the carbon atom (C) bonds directly to -OR^{17a}.

In the general formula (A-1-ii), R^{15a} and R^{17a} each independently represent a hydrocarbon group having 1 or more and 10 or less carbon atoms, preferably a hydrocarbon group having 1 or more and 8 or less carbon atoms, and more preferably an alkyl group having 1 or more and 8 or less carbon atoms.

In the case where r2 is 0, R^{15a} is still more preferably an alkyl group having 1 or more and 6 or less carbon atoms, and in the case where r2 is 1 or more, R^{15a} is still more preferably an alkyl group having 1 or more and 4 or less carbon atoms. Similarly, in the case where r3 is 0, R^{17a} is still more preferably an alkyl group having 1 or more and 6 or less carbon atoms, and in the case where r3 is 1 or more, R^{17a} is still more preferably an alkyl group having 1 or more and 4 or less carbon atoms.

### (Polyoxyalkylene Glycol (PAG))

The polyoxyalkylene glycol (PAG) is preferably a compound (B1) represented by the following general formula (B-1). In the case where the PAG is included in the base oil (P), the base oil (P) may contain the PAG alone or may be contained in combination of two or more kinds thereof.

R^{1b}-[(OR^{2b})ₘ-OR^{3b}]ₙ (B-1)

In the general formula (B-1), R^{1b} represents a hydrogen atom, a monovalent hydrocarbon group having 1 or more and 10 or less carbon atoms, an acyl group having 2 or more and 10 or less carbon atoms, a hydrocarbon group having a valence of 2 or more and 6 or less and having 1 or more and 10 or less carbon atoms, or a substituted or unsubstituted heterocyclic group having 3 or more and 10 or less ring atoms.

R^{2b} represents an alkylene group having 2 or more and 4 or less carbon atoms.

R^{3b} represents a hydrogen atom, a monovalent hydrocarbon group having 1 or more and 10 or less carbon atoms, an acyl group having 2 or more and 10 or less carbon atoms, or a substituted or unsubstituted heterocyclic group having 3 or more and 10 or less ring atoms.

In the general formula (B-1), n represents an integer of 1 or more and 6 or less, preferably an integer of 1 or more and 4 or less, more preferably an integer of 1 or more and 3 or less, and still more preferably 1.

n is defined in accordance with the number of bonding sites of R^{1b} in the general formula (B-1). For example, in the case where R^{1b} is an alkyl group or an acyl group, n is 1, and in the case where R^{1b} is a hydrocarbon group or a heterocyclic group, and the valence of the foregoing group is 2, 3, 4, 5, or 6, n is 2, 3, 4, 5, or 6, respectively.

In the general formula (B-1), m is a mean value of the number of units represented by OR^{2b} and represents a number of 1 or more, and it is preferably a number to make the mean value of (m × n) fall within a range of 6 or more and 80 or less. The value of m is a value which is suitably set such that the hydroxy number of the base oil (P) falls within a range of 15 mgKOH/g or less, and the value is not particularly limited so long as the value is adjusted such that the foregoing hydroxy number falls within the predetermined range, and is preferably set such that the mean value of (m × n) falls within the aforementioned range.

In the case where plural groups represented by OR^{2b} exist, the plural groups represented by OR^{2b} may be the same as or different from each other. In addition, in the case where n is 2 or more, plural groups represented by R^{3b} in one molecule may be the same as or different from each other.

Examples of the monovalent hydrocarbon group which may be selected for R^{1b} and R^{3b} include alkyl groups, such as a methyl group, an ethyl group, various propyl groups, various butyl groups, various pentyl groups, various hexyl groups, various heptyl groups, various octyl groups, various nonyl groups, and various decyl groups; cycloalkyl groups, such as a cyclopentyl group, a cyclohexyl group, various methylcyclohexyl groups, various ethylcyclohexyl groups, various propylcyclohexyl groups, and various dimethylcyclohexyl groups; aryl groups, such as a phenyl group, various methylphenyl groups, various ethylphenyl groups, various dimethylphenyl groups, various propylphenyl groups, various trimethylphenyl groups, various butylphenyl groups, and various naphthyl groups; and arylalkyl groups, such as a benzyl group, various phenylethyl groups, various methylbenzyl groups, various phenylpropyl groups, and various phenylbutyl groups.

The carbon number of the monovalent hydrocarbon group is preferably 1 or more and 10 or less, more preferably 1 or more and 6 or less, and still more preferably 1 or more and 3 or less.

The hydrocarbon group moiety of the acyl group having 2 or more and 10 or less carbon atoms capable of being selected for R^{1b} and R^{3b} may be any of linear, branched, and cyclic. Examples of the hydrocarbon group moiety of the acyl group include a hydrocarbon group having 1 or more and 9 or less carbon atoms of the hydrocarbon group which may be selected for R^{1b} and R^{3b}. Examples of the alkyl group moiety of the acyl group also include a hydrocarbon group having 1 or more and 9 or less carbon atoms of the hydrocarbon group which may be selected for R^{1b} and R^{3b}.

The carbon number of the acyl group is preferably 2 or more and 10 or less, more preferably 2 or more and 8 or less, and still more preferably 2 or more and 6 or less.

Examples of the hydrocarbon group having a valence of 2 or more and 6 or less, which may be selected for R^{1b}, include residues obtained by further removing 1 or more and 5 or less hydrogen atoms from the monovalent hydrocarbon group which may be selected for R^{1b}; and residues obtained by removing a hydroxy group from a polyhydric alcohol, such as trimethylolpropane, glycerin, pentaerythritol, sorbitol, 1,2,3-trihydroxycyclohexane, and 1,3,5-trihydroxycyclohexane.

The carbon number of the hydrocarbon group having a valence of 2 or more and 6 or less is preferably 2 or more and 10 or less, more preferably 2 or more and 8 or less, and still more preferably 2 or more and 6 or less.

The heterocyclic group which may be selected for R^{1b} and R^{3b} is preferably an oxygen atom-containing heterocyclic group or a sulfur atom-containing heterocyclic group. The heterocyclic group may be a saturated ring or may be an unsaturated ring.

Examples of the oxygen atom-containing heterocyclic group include residues obtained by removing 1 or more and 6 or less hydrogen atoms from an oxygen atom-containing saturated heterocyclic ring, such as ethylene oxide, 1,3-propylene oxide, tetrahydrofuran, tetrahydropyran, and hexamethylene oxide, or from an oxygen atom-containing unsaturated heterocyclic ring, such as acetylene oxide, furan, pyran, oxycycloheptatriene, isobenzofuran, and isochromene.

Examples of the sulfur atom-containing heterocyclic group include residues obtained by removing 1 or more and 6 or less hydrogen atoms from a sulfur atom-containing saturated heterocyclic ring, such as ethylene sulfide, trimethylene sulfide, tetrahydrothiophene, tetrahydrothiopyran, and hexamethylene sulfide, or from a sulfur atom-containing unsaturated heterocyclic ring, such as acetylene sulfide, thiophene, thiapyran, and thioterpyridine.

The heterocyclic group which may be selected for R^{1b} and R^{3b} may have a substituent, and the substituent may bond to the oxygen atom in the general formula (B-1). The substituent is as mentioned above, and is preferably an alkyl group having 1 or more and 6 or less carbon atoms, more preferably an alkyl group having 1 or more and 4 or less carbon atoms, and still more preferably 1 or more and 3 or less carbon atoms.

From the standpoint of compatibility with the mixed refrigerant, the number of the ring atoms of the heterocyclic group is preferably 3 or more and 10 or less, more preferably 3 or more and 8 or less, and still more preferably 3 or more and 6 or less.

Examples of the alkylene group which may be selected for R^{2b} include an alkylene group having 2 carbon atoms, such as a dimethylene group (-CH₂CH₂-) and an ethylene group (-CH(CH₃)-); an alkylene group having 3 carbon atoms, such as a trimethylene group (-CH₂CH₂CH₂-), a propylene group (-CH(CH₃)CH₂-), a propylidene group (-CHCH₂CH₃-), and an isopropylidene group (-C(CH₃)₂-); and an alkylene group having 4 carbon atoms, such as a tetramethylene group (-CH₂CH₂CH₂CH₂-), a 1-methyltrimethylene group (-CH(CH₃)CH₂CH₂-), a 2-methyltrimethylene group (-CH₂CH(CH₃)CH₂-), and a butylene group (-C(CH₃)₂CH₂-).

In the case where plural groups represented by R^{2b} exist, the plural groups represented by R^{2b} may be the same as or different from each other and may be a combination of two or more kinds of alkylene groups.

Among these alkylene groups, R^{2b} is preferably a propylene group (-CH(CH₃)CH₂-).

In the compound (B1) represented by the general formula (B-1), the content of the oxypropylene unit (-OCH(CH₃)CH₂-) is preferably 50 mol% or more and 100 mol% or less, more preferably 65 mol% or more and 100 mol% or less, and still more preferably 80 mol% or more and 100 mol% or less, based on the total amount (100 mol%) of the oxyalkylene unit (OR^{2b}) in the compound (B1).

The compound (B1) is preferably at least one selected from the group consisting of polyoxypropylene glycol dimethyl ether represented by the following general formula (B-1-i), polyoxyethylene polyoxypropylene glycol dimethyl ether represented by the following general formula (B-1-ii), polyoxypropylene glycol monobutyl ether represented by the following general formula (B-1-iii), and polyoxypropylene glycol diacetate.

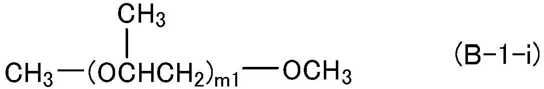

In the general formula (B-1-i), m1 is a mean value of the number of oxypropylene units and represents a number of 1 or more, and it is preferably a number of 6 or more and 80 or less.

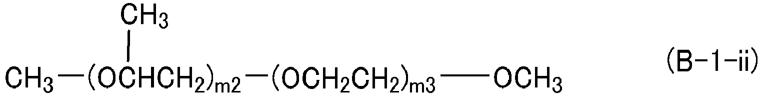

In the general formula (B-1-ii), m2 and m3 are each a mean value of the number of oxypropylene units and that of oxyethylene units, respectively and each independently represent a number of 1 or more, and they are each preferably a number to make the value of (m2 + m3) fall within a range of 6 or more and 80 or less.

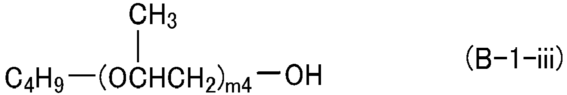

In the general formula (B-1-iii), m4 is a mean value of the number of oxypropylene units and represents a number of 1 or more, and it is preferably a number of 6 or more and 80 or less.

m1 in the general formula (B-1-i), m2 and m3 in the general formula (B-1-ii), and m4 in the general formula (B-1-iii) are each a value suitably set such that the hydroxy number of the base oil (P) falls within a range of 15 mgKOH/g or less, and these values are not particularly limited so long as the values are adjusted such that the foregoing hydroxy number falls within the predetermined range, and are each preferably a value satisfying the aforementioned range.

### (Polyol Ester (POE))

Examples of the polyol ester (POE) include esters of a diol or a polyol and a fatty acid. In the case where the POE is included in the base oil (P), the base oil (P) may contain the POE alone or may contain a combination of two or more kinds thereof.

In the POE, an ester of a diol or a polyol having 3 or more and 20 or less hydroxy groups and a fatty acid having 3 or more and 20 or less carbon atoms is preferred.

Examples of the diol include ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol.

Examples of the polyol include polyhydric alcohols, such as trimethylolethane, trimethylolpropane, trimethylolbutane, di-(trimethylolpropane), tri-(trimethylolpropane), pentaerythritol, di-(pentaerythritol), tri-(pentaerythritol), glycerin, a polyglycerin (e.g., dimer to icosamer of glycerin), 1,3,5-pentanetriol, sorbitol, sorbitan, a sorbitol-glycerin condensate, adonitol, arabitol, xylitol, and mannitol; saccharides, such as xylose, arabinose, ribose, rhamnose, glucose, fructose, galactose, mannose, sorbose, cellobiose, maltose, isomaltose, trehalose, sucrose, raffinose, gentianose, and melenzitose; as well as partially esterified derivatives and methyl glucosides (glycosides) thereof.

Among these polyols, hindered alcohols, such as neopentyl glycol, trimethylolethane, trimethylolpropane, trimethylolbutane, di-(trimethylolpropane), tri-(trimethylolpropane), pentaerythritol, di-(pentaerythritol), and tri-(pentaerythritol), are preferred.

The carbon number of the fatty acid is preferably 3 or more, and more preferably 4 or more, and is preferably 20 or less, more preferably 16 or less, and still more preferably 9 or less.

The carbon number of the fatty acid also includes the carbon atom of the carboxy group (-COOH) which the fatty acid has.

Although the fatty acid may be a linear fatty acid or may be a branched fatty acid, a linear fatty acid is preferred from the standpoint of lubrication performance, whereas a branched fatty acid is preferred from the standpoint of hydrolysis stability. Furthermore, the fatty acid may be a saturated fatty acid or may be an unsaturated fatty acid.

Examples of the fatty acid include linear fatty acids or branched fatty acids, such as isobutyric acid, propionic acid, butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, and oleic acid, as well as so-called neo acids in which the α-carbon atom is quaternized.

The fatty acid is preferably one or more kind of selected from the group consisting of isobutyric acid, valeric acid (n-pentanoic acid), caproic acid (n-hexanoic acid), enanthic acid (n-heptanoic acid), caprylic acid (n-octanoic acid), pelargonic acid (n-nonanoic acid), capric acid (n-decanoic acid), oleic acid (cis-9-octadenoic acid), isopentanoic acid (3-methylbutanoic acid), 2-methylhexanoic acid, 2-ethylpentanoic acid, 2-ethylhexanoic acid, and 3,5,5-trimethylhexanoic acid.

The POE may be a partial ester in which all hydroxy groups of a polyol are not esterified but remain as such, or a complete ester in which all hydroxy groups are esterified; or may also be a mixture of the partial ester and the complete ester. The POE is preferably a complete ester.

In the POE, from the standpoint of more excellent hydrolysis stability, an ester of a hindered alcohol, such as neopentyl glycol, trimethylolethane, trimethylolpropane, trimethylolbutane, di-(trimethylolpropane), tri-(trimethylolpropane), pentaerythritol, di-(pentaerythritol), and tri-(pentaerythritol), is preferred; and an ester of neopentyl glycol, trimethylolethane, trimethylolpropane, trimethylolbutane, pentaerythritol, or an ester of di-(pentaerythritol), is more preferred; and from the standpoint of still more excellent compatibility with the mixed refrigerant and hydrolysis stability, an ester of pentaerythritol and an ester of di-(pentaerythritol) are still more preferred.

As a suitable embodiment of the POE, examples thereof include a diester of neopentyl glycol with one or more kind of fatty acid selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolethane with one or more kind of fatty acid selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolpropane with one or more kind of fatty acid selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolbutane with one or more kind of fatty acid selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; and a tetraester of pentaerythritol with one or more kind of fatty acid selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid.

As one embodiment of the POE, an ester of a polyol with a mixture of two or more kinds of fatty acids is preferred, and an ester of a polyol having 2 or more and 20 or less hydroxy groups with a mixture of two or more kinds of fatty acids each having 3 or more and 20 or less carbon atoms is more preferred.

As examples of the mixture of two or more kinds of fatty acids, a mixed fatty acid of a combination of two or more kinds of fatty acids selected from the group consisting of fatty acids having 4 or more and 9 or less carbon atoms is preferred; one or more kind of mixed fatty acid selected from the group consisting of a mixed fatty acids of a combination of fatty acids having 8 and 9 carbon atoms, respectively, a mixed fatty acid of a combination of fatty acids having 5 and 9 carbon atoms, respectively, and a mixed fatty acid of a combination of fatty acids having 4, 5, and 9 carbon atoms, respectively is more preferred; and a mixed fatty acid of a combination of fatty acids having 8 and 9 carbon atoms, respectively is still more preferred.

In the case of an ester with two or more kinds of fatty acids, the ester may be a mixture of two or more kinds of esters of one kinds of fatty acid and a polyol.

The number average molecular weights (Mn) of PVE, PAG, and POE are each independently preferably 300 or more and 3,000 or less.

When the number average molecular weight (Mn) is 300 or more, the lubricity and the sealing performance become favorable. On the other hand, when the number average molecular weight (Mn) is 3,000 or less, the compatibility with the mixed refrigerant becomes favorable.

From the foregoing standpoint, the number average molecular weights (Mn) of PVE, PAG, and POE are each independently more preferably 350 or more, and still more preferably 400 or more, and more preferably 2,800 or less, still more preferably 2,500 or less, still further preferably 2,000 or less, and still more further preferably 1,500 or less.

The number average molecular weight (Mn) is a value measured by the method described in the section of Examples as mentioned later.

### (Additional Base Oil)

The base oil (P) may further contain an additional base oil in addition to one or more kind of base oil selected from the group consisting of PVE, PAG, and POE within a range where the effects of the present invention are not impaired.

Examples of the additional base oil include a mineral oil or synthetic oils that does not correspond to the aforementioned PVE, PAG, and POE, such as a polyester, a polycarbonate, an α-olefin oligomer hydride, an alicyclic hydrocarbon compound, and an alkylated aromatic hydrocarbon compound, and a mineral oil.

Examples of the mineral oil include a refined oil obtained by subjecting a lubricating oil fraction obtained by distilling under reduced pressure an atmospheric residual oil obtained by atmospherically distilling a crude oil, such as a paraffin based crude oil, an intermediate based crude oil, or a naphthene based crude oil, to at least one treatment of solvent deasphaltation, solvent extraction or hydrocracking, solvent dewaxing or catalytic dewaxing, and hydrorefining; an oil produced by isomerizing mineral oil-based wax; and an oil produced by hydrogenation isomerization dewaxing residual wax in the GTL process including by the Fischer-Tropsch process or the like.

The synthetic oils and the mineral oils capable of being used as the base oil (P) may be used either alone or in combination of two or more kinds thereof.

In the case where the base oil (P) contains the additional base oil, from the standpoint of the refrigerant solubility, the content of the additional base oil is preferably more than 0% by mass and 10% by mass or less, more preferably more than 0% by mass and 5% by mass or less, and still more preferably more than 0% by mass and 2% by mass or less, based on the total amount of 100% by mass of the base oil (P).

In the refrigerator oil, the content of the base oil (P) is preferably 90% by mass or more and 100% by mass or less, more preferably 95% by mass or more and 100% by mass or less, still more preferably 97% by mass or more and 100% by mass or less, and still further preferably 100% by mass, based on the total amount (100% by mass) of the refrigerator oil.

### (Properties of Base Oil (P))

The hydroxy number of the base oil (P) is 15 mgKOH/g or less.

When the hydroxy number of the base oil (P) is more than 15 mgKOH/g, the stability of the resulting composition for refrigerator is deteriorated.

From the foregoing standpoint, the hydroxy number of the base oil (P) is preferably 10 mgKOH/g or less, more preferably 9 mgKOH/g or less, and still more preferably 8 mgKOH/g or less.

The hydroxy number of the base oil (P) is a value measured by the method described in the section of Examples as mentioned later.

The hydroxy number of the base oil (P) can be regulated, for example, by adjusting the charged amounts of the raw materials and/or the condition of hydrogenation treatment after polymerization in the synthesis of various base oils.

The kinematic viscosity at 100°C (hereinafter also referred to as "100°C kinematic viscosity") of the base oil (P) is preferably 2.0 mm²/s or more and 50.0 mm²/s or less.

When the kinematic viscosity is 2.0 mm²/s or more, the lubricity and the sealing performance become favorable. On the other hand, when the kinematic viscosity is 50.0 mm²/s or less, the resulting composition for refrigerator has a good energy saving capability.

From the foregoing standpoint, the 100°C kinematic viscosity of the base oil (P) is preferably 3.0 mm²/s or more, more preferably 4.0 mm²/s or more, and still more preferably 5.0 mm²/s or more, and it is preferably 40.0 mm²/s or less, more preferably 30.0 mm²/s or less, still more preferably 25.0 mm²/s or less, and still further preferably 15.0 mm²/s or less.

The 100°C kinematic viscosity of the base oil (P) is a value measured by the method described in the section of Examples as mentioned later.

From the standpoint of safety, the flash point of the base oil (P) is preferably 170°C or higher. From the foregoing standpoint, the flash point of the base oil (P) is more preferably 180°C or higher, still more preferably 190°C or higher, and still further preferably 195°C or higher.

Although an upper limit of the flash point of the base oil (P) is not particularly limited, it is, for example, 300°C or lower.

The flash point of the base oil (P) is a value measured by the method described in the section of Examples as mentioned later.

### <Additional Additives>

The refrigerator oil may contain, in addition to the base oil (P), various additives (hereinafter also referred to as "additional additives") which a refrigerator oil may contain. Examples of the additional additives include one or more kind of additive selected from the group consisting of an antioxidant, an oiliness improver, an extreme pressure agent, an acid scavenger, an oxygen scavenger, a metal deactivator, a rust inhibitor, and an anti-foaming agent.

In the case where the refrigerator oil contains the foregoing additional additives, from the standpoints of effects, economy, and so on, the total content of the foregoing additional additives is preferably 0.1% by mass or more, more preferably 0.2% by mass or more, and still more preferably 0.3% by mass or more, and it is preferably 10% by mass or less, more preferably 5% by mass or less, still more preferably 3% by mass or less, and still further preferably 2% by mass or less, based on the total amount (100% by mass) of the refrigerator oil.

However, the refrigerator oil may not contain the foregoing additional additives.

Examples of the antioxidant include a phenol-based antioxidant and an amine-based antioxidant.

Examples of the phenol-based antioxidant include a monophenol-based antioxidant and a polyphenol-based antioxidant.

Examples of the monophenol-based antioxidant include alkyl-3-(3,5-di-tert-butyl-4-hydroxyphenyl)propionates (examples of the alkyl group include those having 4 or more and 20 or less carbon atoms, and preferably 8 or more and 18 or less carbon atoms), such as n-octyl-3-(3,5-di-tert-butyl-4-hydroxyphenyl)propionate, 6-methylheptyl-3-(3,5-di-tert-butyl-4-hydroxyphenyl)propionate, and n-octadecyl-3-(3,5-di-tert-butyl-4-hydroxyphenyl)propionate; 2,6-di-tert-butyl-4-alkylphenols (the alkyl group has 1 or more and 4 or less carbon atoms), such as 2,6-di-tert-butyl-4-methylphenol and 2,6-di-tert-butyl-4-ethylphenol; 2,4-dimethyl-6-tert-butylphenol, and 2,6-di-tert-amyl-p-cresol.

Examples of the polyphenol-based antioxidant include 4,4'-methylenebis(2,6-di-tert-butylphenol), 4,4'-bis(2,6-di-tert-butylphenol), 4,4'-bis(2-methyl-6-tert-butylphenol), 2,2'-methylenebis(4-ethyl-6-tert-butylphenol), 2,2'-methylenebis(4-methyl-6-tert-butylphenol), 4,4'-butylidenebis(3-methyl-6-tert-butylphenol), 4,4'-isopropylidenebis(2,6-di-tert-butylphenol), 2,2'-methylenebis(4-methyl-6-nonylphenol), 2,2'-isobutylidenebis(4,6-dimethylphenol), 2,2'-methylenebis(4-methyl-6-cyclohexylphenol), 4,4'-thiobis(2-methyl-6-tert-butylphenol), 4,4'-thiobis(3-methyl-6-tert-butylphenol), 2,2'-thiobis(4-methyl-6-tert-butylphenol), bis(3-methyl-4-hydroxy-5-tert-butylbenzyl)sulfide, bis(3,5-di-tert-butyl-4-hydroxybenzyl)sulfide, and thiodiethylenebis[3-(3,5-di-tert-butyl-4-hydroxyphenyl)propionate].

Examples of the amine-based antioxidant include dialkyl diphenylamines, such as 4,4'-dibutyl diphenylamine and 4,4'-dioctyl diphenylamine; phenyl-α-naphthylamines, such as an alkylphenyl-α-naphthylamine and phenyl-α-naphthylamine; and N,N'-diphenyl-p-phenylenediamine.

The refrigerator oil may contain the antioxidant alone or may contain a combination of two or more kinds thereof.

In the case where the refrigerator oil contains the antioxidant, the content of the antioxidant is preferably 0.1% by mass or more, more preferably 0.2% by mass or more, and still more preferably 0.3% by mass or more, based on the total amount (100% by mass) of the refrigerator oil from the standpoints that an increase of an acid number of the resulting refrigerator oil is suppressed, and that oxidation stability at a high temperature is more easily improved. The foregoing content is preferably 5% by mass or less, more preferably 3% by mass or less, and still more preferably 1% by mass or less from the standpoint of making it easy to exhibit an effect corresponding to the content.

Examples of the oiliness improver include aliphatic saturated or unsaturated monocarboxylic acids, such as stearic acid and oleic acid; polymerized fatty acids, such as a dimer acid and a hydrogenated dimer acid; hydroxy fatty acids, such as ricinoleic acid and 12-hydroxystearic acid; aliphatic saturated or unsaturated monoalcohols, such as lauryl alcohol and oleyl alcohol; aliphatic saturated or unsaturated monoamines, such as stearylamine and oleylamine; aliphatic saturated or unsaturated monocarboxylic acid amides, such as lauric acid amide and oleic acid amide; and partial esters between a polyhydric alcohol, such as glycerin and sorbitol, and an aliphatic saturated or unsaturated monocarboxylic acid.

The refrigerator oil may contain the oiliness improver alone or may contain a combination of two or more kinds thereof.

In the case where the refrigerator oil contains the oiliness improver, the content of the oiliness improver is preferably 0.01% by mass or more, more preferably 0.05% by mass or more, and still more preferably 0.1% by mass or more, and it is preferably 10% by mass or less, more preferably 5% by mass or less, and still more preferably 2% by mass or less, based on the total amount (100% by mass) of the refrigerator oil.

Examples of the extreme pressure agent include a phosphorus-based extreme pressure agent. Examples of the phosphorus-based extreme pressure agent include a phosphoric acid ester, a phosphorous acid ester, an acidic phosphoric acid ester, an acidic phosphorous acid ester, and amine salts thereof.

Examples of the phosphoric acid ester include a triaryl phosphate, a trialkyl phosphate, a monoalkyl diaryl phosphate, a dialkyl monoaryl phosphate, and a trialkenyl phosphate. The "aryl" mentioned regarding the extreme pressure agent is a concept including not only a functional group composed of only an aromatic ring but also an alkylaryl and an arylalkyl.

Examples of the phosphoric acid ester include triaryl phosphates, such as triphenyl phosphate, tricresyl phosphate, benzyl diphenyl phosphate, cresyl diphenyl phosphate, dicresyl phenyl phosphate, propylphenyl diphenyl phosphate, dipropylphenyl phenyl phosphate, ethylphenyl diphenyl phosphate, diethylphenyl phenyl phosphate, triethylphenyl phosphate, tripropylphenyl phosphate, butylphenyl diphenyl phosphate, dibutylphenyl phenyl phosphate, and tributylphenyl phosphate; alkyl phosphates, such as tributyl phosphate, ethyldibutyl phosphate, trihexyl phosphate, tri(2-ethylhexyl) phosphate, tridecyl phosphate, trilauryl phosphate, trimyristyl phosphate, tripalmityl phosphate, and tristearyl phosphate; ethyl diphenyl phosphate, and trioleyl phosphate.

Examples of the acidic phosphoric acid ester include various alkyl acid phosphates and dialkyl acid phosphates.

Examples of the phosphorous acid ester include various trialkyl phosphites, triaryl phosphites, monoalkyl diaryl phosphites, dialkyl monoaryl phosphites, and trialkenyl phosphites.

Examples of the acidic phosphorous acid ester include various dialkyl hydrogen phosphites, dialkenyl hydrogen phosphites, and diaryl hydrogen phosphites.

The phosphorus-based extreme pressure agent may also be a sulfur atom-containing phosphoric acid ester, such as trithiophenyl phosphate, or the like. Examples of the amine salt include amine salts of an acidic phosphoric acid ester or an acidic phosphorous acid ester. The amine that forms the amine salt may be a primary, secondary, or tertiary amine.

The refrigerator oil may contain the extreme pressure agent alone or may contain a combination of two or more kinds thereof.

In the case where the refrigerator oil contains the extreme pressure agent, the content of the extreme pressure agent is preferably 0.1% by mass or more, more preferably 0.3% by mass or more, and still more preferably 0.5% by mass or more, and it is preferably 5% by mass or less, more preferably 3% by mass or less, and still more preferably 2% by mass or less, based on the toral amount (100% by mass) of the refrigerator oil.

Examples of the acid scavenger include an epoxy compound. Examples of the epoxy compound include a glycidyl ether compound, cyclohexene oxide, an α-olefin oxide, and epoxidized soybean oil. Among these, a glycidyl ether compound is preferred.

Examples of the glycidyl ether compound include an aliphatic monoalcohol having preferably 3 or more and 30 or less carbon atoms, more preferably 4 or more and 24 or less carbon atoms, and still more preferably 6 or more and 16 or less carbon atoms; an aliphatic polyhydric alcohol having 3 or more and 30 or less carbon atoms, more preferably 4 or more and 24 or less carbon atoms, and still more preferably 6 or more and 16 or less carbon atoms; and an aromatic compound-derived glycidyl ether containing 1 or more hydroxy groups. The aliphatic monoalcohol or the aliphatic polyhydric alcohol may be linear, branched, or cyclic, and it may also be saturated or unsaturated.

In the case of an aliphatic polyhydric alcohol, or in the case of an aromatic compound containing two or more hydroxy groups, it is preferred that all of the hydroxy groups are glycidyl etherified from the standpoint of stability of the refrigerator oil and suppression of an increase of a hydroxy number.

Examples of the glycidyl ether compound include phenyl glycidyl ether, an alkyl glycidyl ether, and an alkylene glycol glycidyl ether. Examples of the glycidyl ether compound include a glycidyl ether derived from a linear, branched, or cyclic saturated aliphatic monoalcohol having 6 or more and 16 or less carbon atoms (i.e., an alkyl glycidyl ether in which an alkyl group thereof has 6 or more and 16 or less carbon atoms). Examples of such a glycidyl ether include 2-ethylhexyl glycidyl ether, isononyl glycidyl ether, decyl glycidyl ether, lauryl glycidyl ether, and myristyl glycidyl ether.

The refrigerator oil may contain the acid scavenger alone or may contain a combination of two or more kinds thereof.

In the case where the refrigerator oil contains the acid scavenger, the content of the acid scavenger is preferably 0.1% by mass or more, more preferably 0.4% by mass or more, and still more preferably 0.8% by mass or more, based on the total amount (100% by mass) of the refrigerator oil from the standpoint that oxidation stability at high temperature is more easily improved. The foregoing content is preferably 10% by mass or less, more preferably 5% by mass or less, still more preferably 3% by mass or less, and still further preferably 2% by mass or less from the standpoint of making it easy to exhibit an effect corresponding to the content.

Examples of the oxygen scavenger include sulfur-containing aromatic compounds, such as 4,4'-thiobis(3-methyl-6-tert-butylphenol), diphenyl sulfide, dioctyl diphenyl sulfide, a dialkyl diphenylene sulfide, benzothiophene, dibenzothiophene, phenothiazine, benzothiapyran, thiapyran, thianthrene, dibenzothiapyran, and diphenylene disulfide; aliphatic unsaturated compounds, such as various olefins, dienes, and trienes; and terpenes having a double bond.

The refrigerator oil may contain the oxygen scavenger alone or may contain a combination of two or more kinds thereof.

In the case where the refrigerator oil contains the oxygen scavenger, the content of the oxygen scavenger is preferably 0.01% by mass or more, more preferably 0.05% by mass or more, and still more preferably 0.1% by mass or more, and it is preferably 10% by mass or less, more preferably 5% by mass or less, still more preferably 3% by mass or less, and still further preferably 2% by mass or less, based on the total amount (100% by mass) of the refrigerator oil.

Examples of the metal deactivator include a copper deactivator such as an N-[N,N'-dialkyl (alkyl group having 3 or more and 12 or less carbon atoms) aminomethyl] triazole.

Examples of the rust inhibitor include a metal sulfonate, an aliphatic amine, an organic phosphorous acid ester, an organic phosphoric acid ester, an organic sulfonic acid metal salt, an organic phosphoric acid metal salt, an alkenyl succinic acid ester, and a polyhydric alcohol ester.

Examples of the anti-foaming agent include silicone oils, such as dimethyl polysiloxane, and polymethacrylates.

The refrigerator oil may contain the metal deactivator, the rust inhibitor, or the anti-foaming agent, respectively alone or may contain a combination of two or more kinds thereof.

In the case where the refrigerator oil contains the metal deactivator, the rust inhibitor, or the anti-foaming agent, the content of each of them is preferably 0.01% by mass or more, more preferably 0.05% by mass or more, and still more preferably 0.1% by mass or more, and it is preferably 10% by mass or less, more preferably 5% or less, still more preferably 3% by mass or less, and still further preferably 2% by mass or less, based on the total amount (100% by mass) of the refrigerator oil.

### <Method for producing Refrigerator Oil>

The method for producing a refrigerator oil is a method for producing a refrigerator oil containing the base oil (P) for the mixed refrigerant.

The production method is a production method of mixing the base oil (P) to provide the refrigerator oil, and in the production method, the additional additives may also be mixed in addition to the base oil (P).

The detailed descriptions of the base oil (P) and the additional additives are omitted since they are the same as descried above. The mixed refrigerant is also the same as described above.

In the composition for refrigerator, the content ratio of the refrigerator oil and the mixed refrigerant ((refrigerator oil)/(mixed refrigerant)) in terms of mass ratio is preferably 1/99 or more and 99/1 or less, more preferably 1/99 or more and 90/10 or less, and still more preferably 5/95 or more and 88/12 or less. In the case where the mass ratio of the refrigerator oil and the mixed refrigerant is in the range, a lubricating capability and a favorable refrigeration capability in a refrigerator can be obtained.

In the composition for refrigerator, the total content of the mixed refrigerant and the refrigerator oil is 100% by mass, based on the total amount (100% by mass) of the composition for refrigerator.

### <Properties of Composition for Refrigerator>

The composition for refrigerator has good thermal stability and oxidation stability, and preferably has an acid number evaluated by the method shown in the examples described later of 0.05 mgKOH/g or less, more preferably 0.04 mgKOH/g or less, and still more preferably 0.03 mgKOH/g or less.

### [Method for producing Composition for Refrigerator]

The composition for refrigerator may be obtained by mixing the mixed refrigerant and the refrigerator oil. Accordingly, the method for producing the composition for refrigerator according to one embodiment of the present invention is a method for producing a composition for refrigerator, including mixing a mixed refrigerant and a refrigerator oil containing a base oil (P), in which the mixed refrigerant contains a saturated fluorinated hydrocarbon compound (HFC) and an unsaturated fluorinated hydrocarbon compound (HFO), the saturated fluorinated hydrocarbon compound (HFC) contains at least difluoromethane (R32) and 1,1,1,2,2-pentafluoroethane (R125), the mixed refrigerant has a content of any one of difluoromethane (R32) and 1,1,1,2,2-pentafluoroethane (R125) of more than 0% by mass and 20% by mass or less based on the total amount of the mixed refrigerant, and a content of the other thereof of 50% by mass or more based on the total amount of the mixed refrigerant, the base oil (P) contains one or more kind selected from the group consisting of a polyvinyl ether (PVE), a polyalkylene glycol (PAG), and a polyol ester (POE), and the base oil (P) has a hydroxy number of 15 mgKOH/g or less.

The detailed descriptions of the mixed refrigerant and the refrigerator oil are omitted since they are the same as described above. The preferred ranges of the total content of the mixed refrigerant and the refrigerator oil in the composition for refrigerator are also the same as above.

### [Refrigerator]

The composition for refrigerator is charged in an interior of a refrigerator and used.

The refrigerator is preferably a compression-type refrigerator using the mixed refrigerant, and more preferably one having a refrigeration cycle including a compressor, a condenser, an expansion mechanism (e.g., an expansion valve), and an evaporator, or having a refrigeration cycle including a compressor, a condenser, an expansion mechanism, a dryer, and an evaporator.

The composition for refrigerator is used, for example, for lubricating a sliding portion provided in the compressor or the like. The sliding portion is not particularly limited.

The refrigerator is any one that uses the mixed refrigerant applied, for example, to a car air conditioner, such as an open-type car air conditioner and an electric car air conditioner, an air conditioner, such as a room air conditioner and a package air conditioner, a gas heat pump (GHP), a refrigeration system for a freezer, an icebox, a vending machine, showcase, a hot water supplying system for a water heater, a floor heater, a heating system and the refrigerator is preferably applied to an air conditioning application, and more preferably applied to a room air conditioner or a package air conditioner.

In the case where the composition for refrigerator is charged in the interior of the refrigerator and used, the used amount ratio of the refrigerator oil and the mixed refrigerant ((refrigerator oil)/(mixed refrigerant)) in terms of mass ratio is preferably 1/99 or more and 99/1 or less, more preferably 1/99 or more and 90/10 or less, and still more preferably 5/95 or more and 88/12 or less.

The used amount ratio is the ratio of the used amounts of the mixed refrigerant and the refrigerator oil introduced to the equipment, and is consistently based on the used amounts of the components in introducing them into the system, irrespective of whether or not the mixed refrigerant and the refrigerator oil are in a state where they are completely or partially dissolved in each other. Accordingly, the ratio does not mean the ratio of the amounts of the components in the composition for refrigerator.

### Examples

The present invention will be described more specifically with reference to examples below, but the present invention is not limited to the examples.

The properties of the components and the compositions for refrigerator were determined in the following manner.

### [Hydroxy number]

Measured by the neutralization titration method according to JIS K0070:1992.

### [100°C Kinematic Viscosity]

Measured according to JIS K2283:2000.

### [Number Average Molecular Weight (Mn)]

Measured with a gel permeation chromatograph (GPC) equipment. The GPC equipment had two columns of "TSKgel SuperMultipore HZ-M", manufactured by Tosoh Corporation, successively connected to each other, used tetrahydrofuran as an eluent and a refractive index detector (RI detector) as a detector, and the number average molecular weight (Mn) was determined by using polystyrene as a standard sample.

### [Flash Point]

Measured according to JIS K2265-4:2007 (Cleveland open cup method).

### [Stability of Composition for Refrigerator]

Each of the compositions for refrigerator shown in Tables 2 and 3 (30 g each of the refrigerator oil and the mixed refrigerant ((refrigerator oil)/(mixed refrigerant): 30 g/30 g, water content in refrigerator oil: 500 ppm by mass)) and a metal catalyst formed of iron, copper, and aluminum were charged in an autoclave having a capacity of 200 mL, which was then sealed, and after retaining under condition of an air pressure of 18.7 kPa and a temperature of 175°C for 14 days, the composition for refrigerator was visually observed the appearance thereof and measured for the acid number.

The value of the acid number was measured by the indicator titration method according to the "neutralization number test method for lubricating oils" defined in JIS K2501:2003.

The properties of the base oils (P) contained in the compositions for refrigerator shown in Tables 2 and 3 evaluated in Examples and Comparative Examples are shown in Table 1 below.

**Table 1**

| Base oil (P) | | | Hydroxy number (mgKOH/g) | 100°C kinematic viscosity (mm²/s) | Number average molecular weight (Mn) | Flash point (°C) |
|---|---|---|---|---|---|---|
| PVE | PVE-1 | polyethyl vinyl ether | 2 | 9.2 | 860 | 200 |
| | PVE-2 | polyethyl vinyl ether-polyisobutyl vinyl ether copolymer (mass ratio: 9/1) | 7 | 7.9 | 665 | 196 |
| PAG | PAG-1 | polyoxypropylene glycol dimethyl ether | 1 | 10.3 | 1020 | 221 |
| POE | POE-1 | ester of pentaerythritol with octanoic acid and nonanoic acid (octanoic acid/nonanoic acid = 1/1 (molar ratio)) | 4 | 8.5 | 670 | 265 |

### [Examples 1 to 8 and Comparative Examples 1 to 12]

A refrigerator oil containing the base oil (P) shown in Table 1 in an amount of 100% by mass and a mixed refrigerant having a composition shown in Tables 2 and 3 below were mixed in a combination shown in Tables 2 and 3 to prepare compositions for refrigerator, which each were evaluated for the aforementioned stability. The results are shown in Tables 2 and 3.

**Table 2**

| | | | Example 1 | Example 2 | Comparative Example 1 | Comparative Example 2 | Comparative Example 3 | Example 3 | Example 4 | Comparative Example 4 | Comparative Example 5 | Comparative Example 6 |
|---|---|---|---|---|---|---|---|---|---|---|---|---|
| Refrigerator oil *1 | | | PVE-1 | | | | | PVE-2 | | | | |
| Mixed refrigerant (% by mass) *2 | HFC | R32 | 11 | 67 | 25 | 43 | 23 | 11 | 67 | 25 | 43 | 23 |
| | | R125 | 59 | 7 | 25 | - | - | 59 | 7 | 25 | - | - |
| | | R134a | - | - | 25 | 15 | 10 | - | - | 25 | 15 | 10 |
| | HFO | R1234yf | 30 | 26 | 25 | 42 | 67 | 30 | 26 | 25 | 42 | 67 |
| | Total | | 100 | 100 | 100 | 100 | 100 | 100 | 100 | 100 | 100 | 100 |
| Evaluation of stability | Appearance of oil | | colorless | colorless | pale yellow | yellow | yellow | colorless | colorless | pale yellow | yellow | yellow |
| | Acid number (mgKOH/g) | | 0.03 | 0.03 | 0.07 | 0.27 | 0.45 | 0.04 | 0.02 | 0.08 | 0.25 | 0.39 |

| | | | | | | | | | | | | |
|---|---|---|---|---|---|---|---|---|---|---|---|---|
| *1: 100% by mass of base oil (P) in total amount of refrigerator oil *2: content in total amount of mixed refrigerant | | | | | | | | | | | | |

**Table 3**

| | | | Example 5 | Example 6 | Comparative Example 7 | Comparative Example 8 | Comparative Example 9 | Example 7 | Example 8 | Comparative Example 10 | Comparative Example 11 | Comparative Example 12 |
|---|---|---|---|---|---|---|---|---|---|---|---|---|
| Refrigerator oil *1 | | | PAG-1 | | | | | POE-1 | | | | |
| Mixed refrigerant (% by mass) *2 | HFC | R32 | 11 | 67 | 25 | 43 | 23 | 11 | 67 | 25 | 43 | 23 |
| | | R125 | 59 | 7 | 25 | - | - | 59 | 7 | 25 | - | - |
| | | R134a | - | - | 25 | 15 | 10 | - | - | 25 | 15 | 10 |
| | HFO | R1234yf | 30 | 26 | 25 | 42 | 67 | 30 | 26 | 25 | 42 | 67 |
| | Total | | 100 | 100 | 100 | 100 | 100 | 100 | 100 | 100 | 100 | 100 |
| Evaluation of stability | Appearance of oil | | colorless | colorless | pale yellow | yellow | yellow | colorless | colorless | pale yellow | yellow | yellow |
| | Acid number (mgKOH/g) | | 0.04 | 0.05 | 0.05 | 0.31 | 0.53 | 0.05 | 0.05 | 0.08 | 0.22 | 0.39 |

| | | | | | | | | | | | | |
|---|---|---|---|---|---|---|---|---|---|---|---|---|
| *1: 100% by mass of base oil (P) in total amount of refrigerator oil *2: content in total amount of mixed refrigerant | | | | | | | | | | | | |

As shown in Tables 2 and 3, it was confirmed in the evaluation of the stability that the compositions for refrigerator of Examples 1 to 8 each had a good appearance of the oil and a low acid number.

On the other hand, it was confirmed that the compositions for refrigerator of Comparative Examples 1 to 12 each had a pale yellow or yellow appearance of the oil. Furthermore, it was confirmed that the compositions for refrigerator of Comparative Examples 1 to 12 each had an acid number that was the same as or larger than the acid number of the composition for refrigerator of Example using the same refrigerator oil.

### Industrial Applicability

The composition for refrigerator of one embodiment of the present invention is suitable for the purpose of a refrigerator due to the excellent thermal stability and oxidation stability achieved simultaneously, and can be more suitably applied, for example, to a composition for refrigerator used in a closed compression-type refrigerator using a mixed refrigerant. The composition for refrigerator contains the mixed refrigerant and thereby can be suitably applied to a car air conditioner, such as an open-type car air conditioner and an electric car air conditioner, an air conditioner, such as a room air conditioner and a package air conditioner, a gas heat pump (GHP), a refrigeration system for a freezer, an icebox, a vending machine, showcase, a hot water supplying system for a water heater, a floor heater, and a heating system.

## Claims

1. A composition for refrigerator comprising a mixed refrigerant, and a refrigerator oil containing a base oil (P),
the mixed refrigerant containing a saturated fluorinated hydrocarbon compound (HFC) and an unsaturated fluorinated hydrocarbon compound (HFO),
the saturated fluorinated hydrocarbon compound (HFC) containing at least difluoromethane (R32) and 1,1,1,2,2-pentafluoroethane (R125),
the mixed refrigerant having a content of any one of difluoromethane (R32) and 1,1,1,2,2-pentafluoroethane (R125) of more than 0% by mass and 20% by mass or less based on the total amount of the mixed refrigerant, and a content of the other thereof of 50% by mass or more based on the total amount of the mixed refrigerant, and
the base oil (P) containing one or more kind selected from the group consisting of a polyvinyl ether (PVE), a polyalkylene glycol (PAG), and a polyol ester (POE), and the base oil (P) having a hydroxy number of 15 mgKOH/g or less,
wherein the total content of the mixed refrigerant and the refrigerator oil is 100% by mass, and
wherein the mixed refrigerant has a content of 1,1,1,2-tetrafluoroethane (R134a) of 0% by mass.

2. The composition for refrigerator according to claim 1, wherein the mixed refrigerant has a content of the unsaturated fluorinated hydrocarbon compound (HFO) of 40% by mass or less based on the total amount of the mixed refrigerant.

3. The composition for refrigerator according to any one of claims 1 or 2, wherein the mixed refrigerant has an absolute value of a difference between a content of difluoromethane (R32) and a content of 1,1,1,2,2-pentafluoroethane (R125) of 40% by mass or more and 70% by mass or less.

4. The composition for refrigerator according to any one of claims 1 to 3, wherein the unsaturated fluorinated hydrocarbon compound (HFO) contains 2,3,3,3-tetrafluoropropene (R1234yf).

5. The composition for refrigerator according to any one of claims 1 to 4, wherein the base oil (P) has a content of the one or more kind selected from the group consisting of a polyvinyl ether (PVE), a polyalkylene glycol (PAG), and a polyol ester (POE) of 90% by mass or more and 100% by mass or less based on the total amount of the base oil (P).

6. A method for producing the composition for refrigerator according to any one of claims 1 to 5, the method comprising mixing a mixed refrigerant, and a refrigerator oil containing a base oil (P),
the mixed refrigerant containing a saturated fluorinated hydrocarbon compound (HFC) and an unsaturated fluorinated hydrocarbon compound (HFO),
the saturated fluorinated hydrocarbon compound (HFC) containing at least difluoromethane (R32) and 1,1,1,2,2-pentafluoroethane (R125),
the mixed refrigerant having a content of any one of difluoromethane (R32) and 1,1,1,2,2-pentafluoroethane (R125) of more than 0% by mass and 20% by mass or less based on the total amount of the mixed refrigerant, and a content of the other thereof of 50% by mass or more based on the total amount of the mixed refrigerant, and
the base oil (P) containing one or more kind selected from the group consisting of a polyvinyl ether (PVE), a polyalkylene glycol (PAG), and a polyol ester (POE), and the base oil (P) having a hydroxy number of 15 mgKOH/g or less,
wherein the total content of the mixed refrigerant and the refrigerator oil is 100% by mass, and
wherein the mixed refrigerant has a content of 1,1,1,2-tetrafluoroethane (R134a) of 0% by mass.

## Patentansprüche

1. Zusammensetzung für eine Kältemaschine, umfassend ein gemischtes Kältemittel und ein Kältemittelöl, das ein Basisöl (P) enthält,
wobei das gemischte Kältemittel eine gesättigte fluorierte Kohlenwasserstoffverbindung (HFC) und eine ungesättigte fluorierte Kohlenwasserstoffverbindung (HFO) enthält,
die gesättigte fluorierte Kohlenwasserstoffverbindung (HFC) mindestens Difluormethan (R32) und 1,1,1,2,2-Pentafluorethan (R125) enthält,
das gemischte Kältemittel einen Gehalt an einem von Difluormethan (R32) und 1,1,1,2,2-Pentafluorethan (R125) von mehr als 0 Massen-% und 20 Massen-% oder weniger, bezogen auf die Gesamtmenge des gemischten Kältemittels, und einen Gehalt des anderen davon von 50 Massen-% oder mehr, bezogen auf die Gesamtmenge des gemischten Kältemittels, aufweist,
das Basisöl (P) eines oder mehrere enthält, ausgewählt aus der Gruppe, bestehend aus einem Polyvinylether (PVE), einem Polyalkylenglycol (PAG) und einem Polyolester (POE), und das Basisöl (P) eine Hydroxyzahl von 15 mgKOH/g oder weniger aufweist,
worin der Gesamtgehalt des gemischten Kältemittels und des Kältemittelöls 100 Massen-% beträgt, und
worin das gemischte Kältemittel einen Gehalt an 1,1,1,2-Tetrafluorethan (R134a) von 0 Massen-% aufweist.

2. Zusammensetzung für eine Kältemaschine gemäß Anspruch 1, worin das gemischte Kältemittel einen Gehalt der ungesättigten fluorierten Kohlenwasserstoffverbindung (HFO) von 40 Massen-% oder weniger, bezogen auf die Gesamtmenge des gemischten Kältemittels, aufweist.

3. Zusammensetzung für eine Kältemaschine gemäß Anspruch 1 oder 2, worin das gemischte Kältemittel einen absoluten Differenzwert zwischen einem Gehalt an Difluormethan (R32) und einem Gehalt an 1,1,1,2,2-Pentafluorethan (R125) von 40 Massen-% oder mehr und 70 Massen-% oder weniger aufweist.

4. Zusammensetzung für eine Kältemaschine gemäß einem der Ansprüche 1 bis 3, worin die ungesättigte fluorierte Kohlenwasserstoffverbindung (HFO) 2,3,3,3-Tetrafluorpropen (R1234yf) aufweist.

5. Zusammensetzung für eine Kältemaschine gemäß einem der Ansprüche 1 bis 4, worin das Basisöl (P) einen Gehalt von einem oder mehreren, ausgewählt aus der Gruppe, bestehend aus einem Polyvinylether (PVE), einem Polyalkylenglycol (PAG) und einem Polyolester (POE), bezogen auf die Gesamtmenge des Basisöls (P), von 90 Massen-% oder mehr und 100 Massen-% oder weniger aufweist.

6. Verfahren zur Herstellung der Zusammensetzung für eine Kältemaschine gemäß einem der Ansprüche 1 bis 5, das Verfahren umfassend das Mischen eines gemischten Kältemittels und eines Kältemittelöls, das ein Basisöl (P) enthält,
wobei das gemischte Kältemittel eine gesättigte fluorierte Kohlenwasserstoffverbindung (HFC) und eine ungesättigte fluorierte Kohlenwasserstoffverbindung (HFO) enthält,
die gesättigte fluorierte Kohlenwasserstoffverbindung (HFC) mindestens Difluormethan (R32) und 1,1,1,2,2-Pentafluorethan (R125) enthält,
das gemischte Kältemittel einen Gehalt an einem von Difluormethan (R32) und 1,1,1,2,2-Pentafluorethan (R125) von mehr als 0 Massen-% und 20 Massen-% oder weniger, bezogen auf die Gesamtmenge des gemischten Kältemittels, und einen Gehalt des anderen davon von 50 Massen-% oder mehr, bezogen auf die Gesamtmenge des gemischten Kältemittels, aufweist,
das Basisöl (P) eines oder mehrere enthält, ausgewählt aus der Gruppe, bestehend aus einem Polyvinylether (PVE), einem Polyalkylenglycol (PAG) und einem Polyolester (POE), und das Basisöl (P) eine Hydroxyzahl von 15 mgKOH/g oder weniger aufweist,
worin der Gesamtgehalt des gemischten Kältemittels und des Kältemittelöls 100 Massen-% beträgt, und
worin das gemischte Kältemittel einen Gehalt an 1,1,1,2-Tetrafluorethan (R134a) von 0 Massen-% aufweist.

## Revendications

1. Composition pour réfrigérateur comprenant un mélange réfrigérant, et une huile de réfrigérateur contenant une huile de base (P),
le mélange réfrigérant contenant un composé fluorohydrocarboné saturé (HFC) et un composé fluorohydrocarboné insaturé (HFO),
le composé fluorohydrocarboné saturé (HFC) contenant au moins du difluorométhane (R32) et du 1,1,1,2,2-pentafluoroéthane (R125),
le mélange réfrigérant présentant une teneur en l'un quelconque du difluorométhane (R32) et du 1,1,1,2,2-pentafluoroéthane (R125) de plus de 0 % en masse et de 20 % en masse ou moins sur la base de la quantité totale du mélange réfrigérant, et une teneur en l'autre de ceux-ci de 50 % en masse ou plus sur la base de la quantité totale du mélange réfrigérant, et
l'huile de base (P) contenant un ou plusieurs types choisis dans le groupe consistant en un éther polyvinylique (PVE), un polyalkylène glycol (PAG) et un ester de polyol (POE), et l'huile de base (P) présentant un indice hydroxy de 15 mgKOH/g ou moins,
dans laquelle la teneur totale en mélange réfrigérant et en huile de réfrigérateur est de 100 % en masse, et
dans laquelle le mélange réfrigérant présente une teneur en 1,1,1,2-tétrafluoroéthane (R134a) de 0 % en masse.

2. Composition pour réfrigérateur selon la revendication 1, dans laquelle le mélange réfrigérant présente une teneur en composé fluorohydrocarboné insaturé (HFO) de 40 % en masse ou moins sur la base de la quantité totale du mélange réfrigérant.

3. Composition pour réfrigérateur selon l'une quelconque des revendications 1 ou 2, dans laquelle le mélange réfrigérant présente une valeur absolue d'une différence entre une teneur en difluorométhane (R32) et une teneur en 1,1,1,2,2-pentafluoroéthane (R125) de 40 % en masse ou plus et de 70 % en masse ou moins.

4. Composition pour réfrigérateur selon l'une quelconque des revendications 1 à 3, dans laquelle le composé fluorohydrocarboné insaturé (HFO) contient du 2,3,3,3-tétrafluoropropène (R1234yf).

5. Composition pour réfrigérateur selon l'une quelconque des revendications 1 à 4, dans laquelle l'huile de base (P) présente une teneur en les un ou plusieurs types choisis dans le groupe consistant en un éther polyvinylique (PVE), un polyalkylène glycol (PAG) et un ester de polyol (POE) de 90 % en masse ou plus et de 100 % en masse ou moins sur la base de la quantité totale de l'huile de base (P).

6. Procédé de production de la composition pour réfrigérateur selon l'une quelconque des revendications 1 à 5, le procédé comprenant le mélange d'un mélange réfrigérant, et d'une huile de réfrigérateur contenant une huile de base (P),
le mélange réfrigérant contenant un composé fluorohydrocarboné saturé (HFC) et un composé fluorohydrocarboné insaturé (HFO),
le composé fluorohydrocarboné saturé (HFC) contenant au moins du difluorométhane (R32) et du 1,1,1,2,2-pentafluoroéthane (R125),
le mélange réfrigérant présentant une teneur en l'un quelconque du difluorométhane (R32) et du 1,1,1,2,2-pentafluoroéthane (R125) de plus de 0 % en masse et de 20 % en masse ou moins sur la base de la quantité totale du mélange réfrigérant, et une teneur en l'autre de ceux-ci de 50 % en masse ou plus sur la base de la quantité totale du mélange réfrigérant, et
l'huile de base (P) contenant un ou plusieurs types choisis dans le groupe consistant en un éther polyvinylique (PVE), un polyalkylène glycol (PAG) et un ester de polyol (POE), et l'huile de base (P) présentant un indice hydroxy de 15 mgKOH/g ou moins,
dans lequel la teneur totale en mélange réfrigérant et en huile de réfrigérateur est de 100 % en masse, et
dans lequel le mélange réfrigérant présente une teneur en 1,1,1,2-tétrafluoroéthane (R134a) de 0 % en masse.
